# EUROPÄISCHE PATENTSCHRIFT

(11) **EP 3 580 578 B1**
(45) Veröffentlichungstag und Bekanntmachung des Hinweises auf die Patenterteilung: **08.12.2021**
(21) Anmeldenummer: 18705314.5
(22) Anmeldetag: 05.02.2018
(51) Int. Cl.: H04W 12/08, H04W 12/122, G01S 3/14, G01S 5/00, G01S 5/02, G01S 11/06, G07C 9/00, H04W 12/63, H04W 4/02, H04W 4/40

(54) **SCHUTZ GEGEN EINEN RELAYANGRIFF**
PROTECTION AGAINST A RELAY ATTACK
PROTECTION CONTRE UNE ATTAQUE DE RELAIS

(30) Priorität: 07.02.2017 DE 102017001092
(43) Veröffentlichungstag der Anmeldung: 18.12.2019
(73) Patentinhaber: Giesecke+Devrient Mobile Security GmbH, 81677 München (DE)
(72) Erfinder: FINKENZELLER, Klaus, 85774 Unterföhring (DE); STÖHR, Volker, 81827 München (DE)
(74) Vertreter: Giesecke + Devrient IP
(86) Internationale Anmeldenummer: PCT/EP2018/000047
(87) Internationale Veröffentlichungsnummer: WO 2018/145808

(56) Entgegenhaltungen:
- DE-A1-102012 007 286
- DE-A1-102013 015 478
- US-A1- 2015 222 658
- US-B1- 6 269 246
- CHICK D F ET AL: "Direction finding with mutually orthogonal antennas", ANTENNAS AND PROPAGATION (APSURSI), 2011 IEEE INTERNATIONAL SYMPOSIUM ON, IEEE, 3. Juli 2011 (2011-07-03), Seiten 2853-2856, XP031958430, DOI: 10.1109/APS.2011.5997121 ISBN: 978-1-4244-9562-7
- MOSTAFA AFGANI ET AL: "Speed Estimation Using Relative Radio Frequency Signature Matching", VEHICULAR TECHNOLOGY CONFERENCE, 2007. VTC-2007 FALL. 2007 IEEE 66TH, IEEE, PI, 1. September 2007 (2007-09-01), Seiten 1970-1974, XP031147752, ISBN: 978-1-4244-0263-2

## Beschreibung

Die vorliegende Erfindung ist auf ein Verfahren zum Schutz gegen einen Relayangriff auf ein System bestehend aus mindestens einer ersten und einer zweiten Kommunikationsvorrichtung gerichtet, wobei zwischen der ersten und der zweiten Kommunikationsvorrichtung Daten drahtlos übertragen werden.

Aus dem Stand der Technik sind sogenannte "Clicker"- und Keyless-Go-Systeme, als Zutrittssystem zu einem Kraftfahrzeug bekannt. Bei den "Clickern" wird nach Betätigung einer Taste üblicherweise ein Rolling-Code erzeugt und bei einer Frequenz von 433,975 MHz oder 867 MHz im UHF-Band an das Kraftfahrzeug übertragen. Bei den Keyless-Go-Systemen befindet sich zusätzlich ein RFID-Lesegerät im Kraftfahrzeug sowie ein Tag im Fahrzeugschlüssel, sodass eine Türe bei Annäherung an das Kraftfahrzeug geöffnet werden kann. Bei diesen Verfahren kann ferner detektiert werden, ob sich der Fahrzeugschlüssel innerhalb oder außerhalb des Kraftfahrzeugs befindet, um z.B. die Zündung des Kraftfahrzeugs entsprechend sperren oder freigeben zu können.

In der Regel wird bei einem Keyless-Go-System eine Kombination bestehend aus einem RFID-Signal bei 125 kHz, welches vom Kraftfahrzeug erzeugt wird und als sogenanntes Wake-Up-Signal dient, sowie einem UHF-Sender, welcher sich im Fahrzeugschlüssel befindet und nach Empfang des Wake-Up Signals eine Antwort an das Kraftfahrzeug sendet, verwendet.

Ferner sind aus dem Stand der Technik auch sogenannte Wideband-RF-Monitoring-Empfänger bekannt, mit denen eine große Bandbreite spektral überwacht werden kann. Es ist nach dem Stand der Technik zudem bekannt, derartige Monitoring-Empfänger zu einer großräumigen Lokalisierung von mobilen Empfängern, z.B. LKWs, zu verwenden. Bestimmt man z.B. Amplitude und Frequenz von Signalen der zu empfangenden Radio- und DVB-T Sender, sowie der zu empfangenden GSM-Zellen, so lässt sich exakt bestimmen, ob sich der Empfänger z.B. im Großraum München, Nürnberg oder etwa Frankfurt befindet. Darüber hinaus verändert sich das Signal des Senders, wenn der Empfänger seinen Ort verändert. Dieser Effekt ist umso ausgeprägter, wenn zur Lokalisierung eines bestimmten Emfpängers zusätzlich auch Sender mit kurzer Reichweite, z.B. für WLAN, hinzugezogen werden. Damit der Empfänger feststellen kann, ob sich seine Position verändert hat, werden von dem Empfänger zeitversetzt mehrere Messungen durchgeführt.

Problematisch an "Clicker"- und Keyless-Go- Systemen ist, dass bei diesen Systemen durch einen Relay-Angriff die zwischen Kraftfahrzeug und Fahrzeugschlüssel übertragenen Daten unberechtigt aus der Ferne gelesen werden können, und somit das entsprechende Kraftfahrzeug unberechtigt geöffnet und gestartet werden kann.

Es ist somit eine Aufgabe der vorliegenden Erfindung, eine Lösung für die oben beschriebenen Probleme zur Verfügung zu stellen.

Die Aufgabe wird gelöst durch ein Verfahren zum Schutz gegen einen Relayangriff gemäß den Merkmalen des Patentanspruchs 1. Weitere vorteilhafte Ausgestaltungen sind in den Unteransprüchen beschrieben.

Zur Lösung des Problems offenbart die Erfindung ein Verfahren zum Schutz gegen einen Relayangriff auf ein System, bestehend aus mindestens einer ersten und einer zweiten Kommunikationsvorrichtung, wobei zwischen der ersten und der zweiten Kommunikationsvorrichtung Daten drahtlos übertragen werden. Erfindungsgemäß bestimmt die erste Kommunikationsvor-Der folgende Text soll in der ursprünglichen Beschreibung auf Seite 2, Zeile 17 eingefügt werden.

DE 102013015478 A1 beschreibt ein Verfahren zum Erkennen, ob sich ein Smart Phone in der Nähe eines Kraftfahrzeugs befindet.

US 6269246 B1 beschreibt ein Verfahren zur Bestimmung des Orts einer mobilen Einheit durch einen Vergleich eines vorgegebenen Ausschnitts eines Hochfrequenzspektrums, welches durch die mobile Einheit aufgenommen wurde, mit mehreren Ausschnitten von Hochfrequenzspektren von verschiedenen Orten einer Referenzdatenbasis.

Chick D. F. et al, "Direction finding with mutually orthogonal antennas", Antennas and Propagation (APSURSI), 2011 IEEE International Symposium On, IEEE, 3. Juli 2001 (2011-07-03), Seiten 2853 - 2856, ISBN 978-1-4244-9562-7 beschreibt eine Kommunikationsvorrichtung mit drei Antennen, wobei mittels der drei Antennen ein räumlicher Winkel zwischen empfangenen Signalen bestimmt wird.

US 2015/222658 A1 beschreibt eine Vorrichtung zum Schutz gegen Relay-Angriffe.

Der folgende Text soll in der ursprünglichen Beschreibung auf Seite 2, Zeile 17 als neue Seite 2b eingefügt werden.

DE 10 2012 007286 A1 beschreibt ein Verfahren zum Durchführen einer Transaktion zwischen einem tragbaren Datenträger und einem Terminal. Die Transaktion wird nur dann ausgeführt, wenn nach Auswertung eines Magnetfelds, welches durch das Terminal erzeugt wird, festgestellt wird, dass sich der Datenträger innerhalb eines bestimmten Bereichs um das Terminal befindet.

Im Dokument "Speed Estimation Using Relative Radio Frequency Signature Matching" von Mostafa Afgani und Harald Haas, erschienen in Vehicular Technology Conference, 2007. VTC-2007 Fall. 2007 IEEE 66th, 20070901 IEEE, Pi - ISBN 978-1-4244-0263-2; ISBN 1-4244-0263-8, Seiten 1970 ― 1974 wird eine Schätzung einer Geschwindigkeit aus der Kenntnis eines festen Abstands zwischen Antennen und einer Zeit, welche eine nachlaufende Antenne benötigt, um die gleichen Kanalbedingungen wie eine führende Antenne zu erfahren, beschrieben. richtung innerhalb eines Frequenzbands ein erstes Spektrum von allen am Ort der ersten Kommunikationsvorrichtung zu empfangenden, drahtlos übertragenen Signalen. Die zweite Kommunikationsvorrichtung bestimmt ebenfalls innerhalb des Frequenzbands ein zweites Spektrum von allen am Ort der zweiten Kommunikationsvorrichtung zu empfangenden, drahtlos übertragenen Signalen. Das Frequenzband selbst wird durch eine minimale und eine maximale Frequenz begrenzt, wobei die minimale und die maximale Frequenz in Abhängigkeit von der Anwendung geeignet festzulegen sind, wobei auch mehrere Frequenzbänder verwendet werden können. Nach Bestimmung des zweiten Spektrums überträgt die zweite Kommunikationsvorrichtung das zweite Spektrum an die erste Kommunikationsvorrichtung. Die erste Kommunikationsvorrichtung vergleicht das erste Spektrum mit dem zweiten Spektrum, um festzustellen, ob sich die zweite Kommunikationsvorrichtung am Ort der ersten Kommunikationsvorrichtung befindet. Wenn beim Vergleich des ersten mit dem zweiten Spektrum festgestellt wird, dass die beiden Spektren übereinstimmen, dann ist anzunehmen, dass sich die erste und die zweite Kommunikationsvorrichtung an einem gemeinsamen Ort befinden und somit kein Relayangriff vorliegt.

Gemäß eines vorteilhaften Ausführungsbeispiels der Erfindung werden das erste und das zweite Spektrum gleichzeitig oder zu unterschiedlichen Zeiten bestimmt werden. Die Bestimmung der beiden Spektren zu gleichen Zeit hat den Vorteil, dass die beiden Spektren unmittelbar verglichen werden können. Die Bestimmung zu unterschiedlichen Zeiten hat den Vorteil, dass ein Angreifer nicht den Zeitpunkt kennt, wann er von außen ein Spektrum nachahmen soll und somit erhöht diese Maßnahme den Schutz gegen Angriffe. Die erste Kommunikationsvorrichtung signalisiert der zweiten Kommunikationsvorrichtung vorzugsweise wann die die zweite Kommunikationsvorrichtung mit der Bestimmung des zu empfangenden Spektrums beginnen bzw. enden soll.

Gemäß eines weiteren vorteilhaften Ausführungsbeispiels der Erfindung werden das erste und das zweite Spektrum ständig oder nur zu bestimmten Zeiten bestimmt. Die ständige Erfassung der Spektren hat den Vorteil, dass sehr viele Daten erfasst werden und somit eine höhere Genauigkeit bezüglich der Bestimmung des Orts erreicht wird. Der Vorteil der Bestimmung der Spektren nur zu bestimmten Zeiten hat den Vorteil, dass der Aufwand an Datenverarbeitung gering gehalten werden kann und dass potentielle Angreifer nicht wissen, wann die Spektren bestimmt werden, sodass ein erhöhter Schutz gegen Angreifer gegeben ist, die versuchen das am Ort der ersten oder zweiten Kommunikationsvorrichtung zu empfangende Spektrum nachzuahmen. Ferner ist die Bestimmung der Spektren nur zu bestimmten Zeiten schnell durchzuführen.

Gemäß eines weiteren vorteilhaften Ausführungsbeispiels der Erfindung sendet die erste Kommunikationsvorrichtung zusätzlich zu den am jeweiligen Ort der ersten und zweiten Kommunikationsvorrichtung zu empfangenden Spektren selbst ein Signal aus, welches sowohl von der ersten Kommunikationsvorrichtung selbst als auch von der zweiten Kommunikationsvorrichtung empfangen wird. Der Vorteil ist, dass dieses Signal nur von der ersten Kommunikationsvorrichtung ausgesendet wird und dies somit ein eindeutiges und leicht zu erkennendes Merkmal in den jeweils zu bestimmenden Spektren der ersten und zweiten Kommunikationsvorrichtung ist. Das Signal liegt innerhalb des oben erwähnten, geeignet festzulegenden Frequenzbands. Innerhalb des Frequenzbands kann das Signal auf einer oder auf unterschiedlichen Frequenzen ausgesendet werden. Die erste Kommunikationsvorrichtung sendet bevorzugt mindestens ein Signal während die erste und zweite Kommunikationsvorrichtung jeweils ein Spektrum der zu empfangenden Signale bestimmen.

Gemäß eines weiteren vorteilhaften Ausführungsbeispiels der Erfindung teilt die erste Kommunikationsvorrichtung der zweiten Kommunikationsvorrichtung mit, für welche Frequenzen jeweils eine Signalamplitude zu bestimmen ist. Dies hat den Vorteil, dass sich die zu bestimmenden Spektren auf bestimmte Frequenzen beschränken lassen und somit den Aufwand zur Auswertung und zum Vergleich der Spektren reduziert, aber auch den Schutz gegen Angreifer erhöht, da ein Angreifer die zu bestimmenden Frequenzen nicht kennt.

Gemäß eines weiteren vorteilhaften Ausführungsbeispiels der Erfindung wird die Datenübertragung zwischen der ersten und der zweiten Kommunikationsvorrichtung verschlüsselt. Dies hat den Vorteil, dass selbst wenn ein Angreifer die Datenübertragung empfangen sollte, er den Inhalt nicht entschlüsseln kann und somit für ihn nutzlos ist.

Gemäß eines weiteren vorteilhaften Ausführungsbeispiels der Erfindung verfügen die erste und die zweite Kommunikationsvorrichtung jeweils über drei Antennen, wobei die drei Antennen jeweils in einem Winkel, z.B. im rechten Winkel zueinander angeordnet sind. Dies hat den Vorteil, dass durch eine Messung einer Amplitude eines empfangenen Signals und ggf. einer Phasenlage des empfangenen Signals in allen drei Raumrichtungen ein Betrag der Amplitude des Signals unabhängig von einer Ausrichtung der ersten und zweiten Kommunikationsvorrichtung bestimmt werden kann. Folglich ist eine bessere Vergleichbarkeit der von erster und zweiter Kommunikationsvorrichtung gemessenen Signale möglich.

Gemäß eines weiteren vorteilhaften Ausführungsbeispiels der Erfindung wird ein räumlicher Winkel zwischen den einzelnen zu empfangenden Signalen bestimmt. Dies hat den Vorteil, dass neben der Frequenz und der Amplitude eines jeden im Spektrum bestimmten Signals zusätzlich ein räumlicher Winkel zwischen den einzelnen Signalen mittels der drei oben genannten Antennen, die jeweils z.B. im rechten Winkel zueinander angeordnet sind, bestimmt wird, was den Schutz gegen Angreifer weiter erhöht.

Gemäß eines weiteren vorteilhaften Ausführungsbeispiels ist die erste Kommunikationsvorrichtung ein Kraftfahrzeug und die zweite Kommunikationsvorrichtung ein Fahrzeugschlüssel. Alternativ ist die erste Kommunikationsvorrichtung der Fahrzeugschlüssel und die zweite Kommunikationsvorrichtung das Kraftfahrzeug. Dies hat den Vorteil, dass die Erfindung im Kraftfahrzeugbereich zum Schutz gegen Relayangriffe eingesetzt werden kann. Jedoch ist die Erfindung nicht auf den Kraftfahrzeugbereich beschränkt, sondern kann beispielsweise auch im Terminalbereich eingesetzt werden, wobei die erste Kommunikationsvorrichtung ein Terminal, z.B. ein Bankterminal, ist und die zweite Kommunikationsvorrichtung ein tragbarer Datenträger, z.B. eine Chipkarte oder ein Wearable, ist.

Weitere vorteilhafte Ausgestaltungen werden anhand der beigefügten Figuren näher erläutert. Es zeigen:

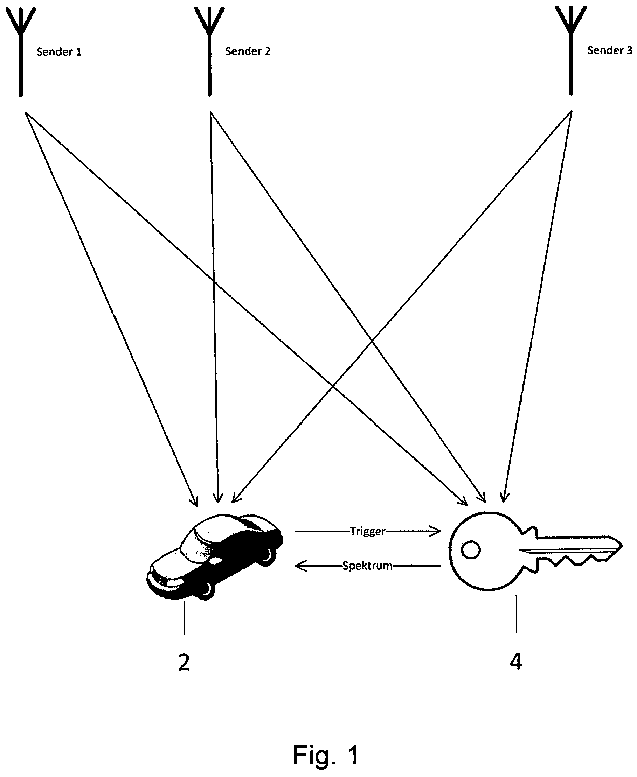

- Fig. 1:: ein erstes Ausführungsbeispiel der Erfindung, in welchem ein Kraftfahrzeug und ein Fahrzeugschlüssel an ihrem jeweiligen Ort ein Spektrum von zu empfangenden Signalen von drei unterschiedlichen Sendern bestimmen und die Spektren anschließend vom Kraftfahrzeug verglichen werden, um zu festzustellen, ob sich der Fahrzeugschlüssel am Ort des Kraftfahrzeugs befindet;

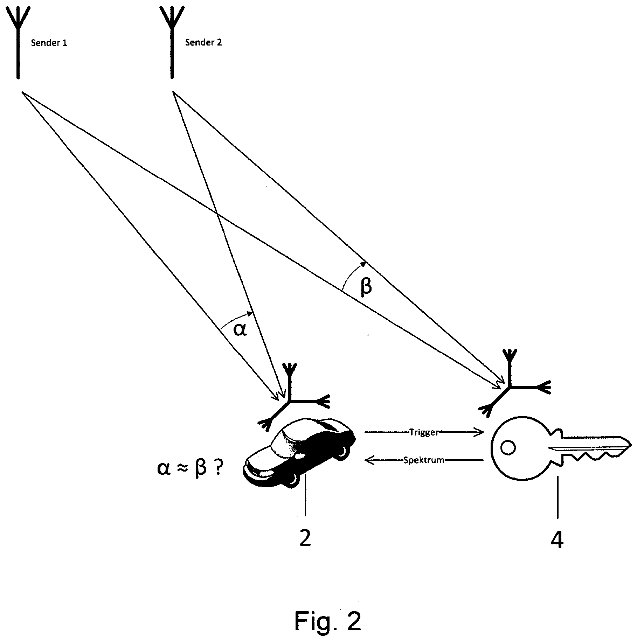

- Fig. 2:: ein zweites Ausführungsbeispiel der Erfindung, in welchem das Kraftfahrzeug und der Fahrzeugschlüssel jeweils drei Antennen aufweisen, welche z.B. jeweils um 90 Grad versetzt angeordnet sind, um einen räumlichen Winkel zwischen den empfangenen Signalen von zwei Sendern zu ermitteln.

Figur 1 zeigt ein erstes Ausführungsbeispiel der Erfindung, in welchem ein Kraftfahrzeug 2 als erste Kommunikationsvorrichtung und ein Fahrzeugschlüssel 4 als zweite Kommunikationsvorrichtung an ihrem jeweiligen Ort ein Spektrum von zu empfangenden Signalen eines Senders 1, Senders 2 und Senders 3 bestimmen. Das Kraftfahrzeug 2 sendet ein Triggersignal "Trigger" an den Fahrzeugschlüssel 4, um dem Fahrzeugschlüssel 4 zu signalisieren, dass ein Spektrum bestimmt werden soll. Sobald der Fahrzeugschlüssel 4 das Spektrum bestimmt hat, wird das Spektrum mittels einer Antwort "Spektrum" an das Kraftfahrzeug 2 übertragen. Das Kraftfahrzeug 2 vergleicht die beiden Spektren, um festzustellen, ob sich der Fahrzeugschlüssel 4 am Ort des Kraftfahrzeugs 2 befindet.

Das Kraftfahrzeug 2 und der Fahrzeugschlüssel 4 weisen jeweils einen Sender und einen Empfänger auf, welche aus Gründen der Übersicht nicht dargestellt sind, um drahtlos Daten auszutauschen. Wesentlich für die Erfindung ist, dass das Kraftfahrzeug 2 und der Fahrzeugschlüssel 4 zusätzlich einen Empfänger aufweisen, der aus Gründen der Übersicht nicht dargestellt ist, um an ihrem jeweiligen Ort innerhalb eines festzulegenden Frequenzbands von Sendern, welche in Figur 1 durch die Sender 1 bis 3 dargestellt sind, drahtlos übertragene Signale zu empfangen, und daraus jeweils ein Spektrum zu erstellen. Das Kraftfahrzeug 2 fordert beispielsweise die Erstellung des Spektrums beim Fahrzeugschlüssel 4 mittels des dargestellten Triggersignals an und empfängt anschließend das vom Fahrzeugschlüssel 4 erstellte Spektrum, um es mit dem selbst bestimmten Spektrum zu vergleichen. Wenn beide Spektren übereinstimmen, dann ist davon auszugehen, dass kein Relayangriff vorliegt, sodass z.B. die Türen des Kraftfahrzeugs 2 entriegelt oder der Motor gestartet werden können. Der zusätzliche Empfänger im Kraftfahrzeug 2 und im Fahrzeugschlüssel 4 hat beispielsweise als Empfangsbereich ein Frequenzband von 100 MHz bis 2,3 GHz. Eine minimale und eine maximale Frequenz, welche das Frequenzband begrenzen, sind geeignet festzulegen.

Um den Datenaustausch zwischen Kraftfahrzeug 2 und Fahrzeugschlüssel 4 vor unbefugten Zugriff zu schützen, wird dieser mittels eines geeigneten kryptographischen Verfahrens verschlüsselt.

Beim Vergleich der Spektren des Kraftfahrzeugs 2 und des Fahrzeugschlüssels 4 kommt ein Algorithmus zum Einsatz, welcher in der Lage ist die Spektren zu vergleichen und anhand von Unterschieden im Spektrum erkennt, ob sich der Fahrzeugschlüssel 4 ausreichend nahe am Ort des Kraftfahrzeugs 2 befindet. Je nach Anwendung ist geeignet festzulegen, bis zu welcher Grenze ein Unterschied noch akzeptabel ist, dass der Fahrzeugschlüssel 4 noch als am Ort des Kraftfahrzeugs 2 befindlich gilt, bzw. umgekehrt, ab welchem Unterschied ein Relayangriff angenommen wird.

Am Ort des Kraftfahrzeugs 2 und des Fahrzeugschlüssels 4 sind die Signale der drei dargestellten Sender, d.h. Sender 1 , Sender 2 und Sender 3, die z.B. Mobilfunk-, WLAN- und Rundfunk-Signale aussenden, mit entsprechenden Amplituden zu empfangen. Die Amplitude der empfangenen Signale hängt dabei insbesondere von der Sendeleistung, der Sendefrequenz hinsichtlich Freiraumdämpfung, der Entfernung des Senders und der unmittelbaren Umgebung, z.B. einer Tiefgarage, des Kraftfahrzeugs 2 und des Fahrzeugschlüssels 4 ab. Darüber hinaus wirken sich Signalreflexionen auf den Weg zwischen Sender und Kraftfahrzeug 2 bzw. Fahrzeugschlüssel 4, welche lokal und kleinräumig zu Auslöschung oder Verstärkung führen können, auf die empfangenen Signale aus. Die Amplituden der einzelnen empfangenen Signale können zudem mit der Zeit variieren.

Um festzustellen, ob sich der Fahrzeugschlüssel 4 in der Nähe des Kraftfahrzeugs 2 befindet, messen Kraftfahrzeug 2 und Fahrzeugschlüssel 4 zeitgleich oder zu unterschiedlichen Zeiten über das gleiche, geeignet festzulegende Frequenzband die Amplitude der zu empfangenden Signale, um daraus jeweils ein Spektrum zu erstellen. Unmittelbar nach der Erstellung des Spektrums überträgt der Fahrzeugschlüssel 4 das Spektrum an das Kraftfahrzeug 2, wo die beiden von Kraftfahrzeug 2 und Fahrzeugschlüssel 4 gemessenen Spektren miteinander verglichen werden. Befinden sich Kraftfahrzeug 2 und Fahrzeugschlüssel 4 in unmittelbarer Nähe zueinander, werden beide Spektren für die Signale gleicher Frequenz, eine ähnliche Amplitude aufweisen. Erfindungsgemäß ist vorgesehen, dass ein geeigneter Algorithmus die Übereinstimmung beider Spektren bestimmt und bei ausreichender Übereinstimmung z.B. den Zugang zum Fahrzeug freigibt. Es ist ferner möglich, dass tolerierbare Abweichungen in Frequenz und Amplitude geeignet vorgegeben werden.

Nachdem die Amplituden der Signale mit der Zeit variieren können, stellen Kraftfahrzeug 2 und Fahrzeugschlüssel 4 sicher, dass die Signalmessungen vorzugsweise zum gleichen Zeitpunkt durchgeführt werden. Zum erhöhten Schutz gegen einen unerlaubten Angriff ist alternativ auch eine Messung zu unterschiedlichen Zeiten möglich.

Es ist ferner möglich, dass sich zusätzlich am Kraftfahrzeug 2 noch ein Sender, welcher aus Gründen der Übersicht nicht dargestellt ist, befindet, der auf einer beliebigen Frequenz innerhalb des zu empfangenden, geeignet festzulegenden Frequenzbands des Kraftfahrzeugs 2 und des Fahrzeugschlüssels 4 ein Signal aussendet. Von dem Sender können auch mehrere Signale auf unterschiedlichen Frequenzen gesendet werden. Idealerweise werden mehrere Frequenzen zufällig ausgewählt und die Aussendung auf den Zeitraum der Bestimmung der Spektren begrenzt. Somit empfangen Kraftfahrzeug 2 und Fahrzeugschlüssel 4 zusätzlich zu den Signalen der Sender 1, 2 und 3 aus der Umgebung auch noch das vom Sender des Kraftfahrzeugs 2 ausgesendete Signal. In einem Spektrum des Fahrzeugschlüssels 4 kann dann einfach nach der Frequenz des Senders des Kraftfahrzeugs 2 gesucht werden, um leicht feststellen zu können, ob der Fahrzeugschlüssel das Signal überhaupt empfangen kann und wenn ja mit welcher Amplitude.

Beim Vergleich der Amplitude der vom Kraftfahrzeug 2 empfangenen Signale mit der Amplitude vom Fahrzeugschlüssel 4 empfangenen Signalen ist zu berücksichtigen, dass die vom Kraftfahrzeug 2 ausgesendeten Signale vom Kraftfahrzeug 2 selbst wegen der geringen Distanz zwischen Sender und Empfänger stärker empfangen werden als vom Fahrzeugschlüssel 4.

In einem weiteren Ausführungsbeispiel der Erfindung entscheidet das Kraftfahrzeug 2 für welche Frequenzen die Signalamplituden gemessen werden sollen und teilt dies dem Fahrzeugschlüssel 4 mit. Zur Vorbereitung dieser Entscheidung sucht das Kraftfahrzeug 2 vorher das komplette zu empfangende Spektrum nach Signalen ab. Das Kraftfahrzeug 2 wählt anschließend Frequenzen mit Signalen oberhalb einer bestimmten Amplitude und Frequenzen unterhalb der bestimmten Amplitude aus. Nach der Auswahl messen dann sowohl das Kraftfahrzeug 2 als auch der Fahrzeugschlüssel 4 nur die Amplituden auf den vom Kraftfahrzeug 2 ausgewählten Frequenzen, was einerseits schnell geht, andererseits auch einen hohen Schutz gegen Angreifer darstellt, da der Angreifer die ausgewählten Frequenzen nicht kennt.

In einem weiteren Ausführungsbeispiel der Erfindung ist vorgesehen, dass der Fahrzeugschlüssel 4 und das Kraftfahrzeug 2 an ihrem jeweiligen Ort Signale empfangen, diese demodulieren und/oder decodieren, um die Identität des jeweiligen empfangenen Senders zu ermitteln. Eine solche Identität kann zum Beispiel die SSID eines WLAN-Netzes, die RDS-Senderkennung von UKW-Rundfunksendern oder die Kennung einer GSM-Funkzelle sein. Beim Vergleich der vom Kraftfahrzeug 2 und Fahrzeugschlüssel 4 bestimmten Spektren kann somit überprüft werden, ob die Signale von den selben Sendern empfangen wurde. Insbesondere die SSID eines WLAN erlaubt dabei die Abgrenzung über kurze Entfernungen.

Die Signalamplitude, die ein Empfänger allgemein ermittelt, hängt von der Orientierung, d.h. Ausbreitungsrichtung und Polarisation, des Signals und von der Orientierung der Empfangsantenne bezüglich des Signals ab. Da die Orientierungen der verschiedenen Signale und der Empfänger in Kraftfahrzeug 2 und Fahrzeugschlüssel 4 unbestimmt und i.d.R. zueinander verschieden sind, wird in einer Weiterbildung der Erfindung vorgeschlagen, dass der Empfänger zum Empfang des festzulegenden Frequenzbands im Kraftfahrzeug 2 und im Fahrzeugschlüssel 4 über drei Antennen verfügt, die jeweils in einem Winkel, z.B. rechtwinklig, zueinander angeordnet sind. Durch die Messung der Signalamplitude und ggf. einer Phasenlage des Signals in allen drei Raumrichtungen kann der Betrag der Signalamplitude unabhängig von der Ausrichtung des Kraftfahrzeugs 2 bzw. des Fahrzeugschlüssels 4 ermittelt werden. Somit ist eine bessere Vergleichbarkeit der vom Kraftfahrzeug 2 und vom Fahrzeugschlüssel 4 gemessenen Signalamplituden gegeben.

Als zusätzliche Weiterbildung der Erfindung können bei einer solchen Antennenanordnung von dem Empfänger für das festzulegende Frequenzband des Kraftfahrzeugs 2 und des Fahrzeugschlüssels 4 die Winkel zwischen den empfangenen Signalen bestimmt werden. Ein erweiterter Vergleichsalgorithmus vergleicht dann zusätzlich die vom Kraftahrzeug 2 und die vom Fahrzeugschlüssel 4 ermittelten Winkel miteinander. Dieses Ausführungsbeispiel ist in Figur 2 dargestellt. Aus Gründen der Übersicht wurden hier nur Sender 1 und Sender 2 dargestellt, deren Signale jeweils vom Kraftfahrzeug 2 und vom Fahrzeugschlüssel 4 empfangen werden. Zwischen den Signalen kann ein Winkel α und ein Winkel β bestimmt werden. Ein Angreifer, der einen Relaisangriff durchführt, müsste nicht nur eine Kommunikation zwischen Kraftfahrzeug 2 und Fahrzeugschlüssel 4 über eine größere Strecke weiterleiten, sondern auch in der Nähe von Kraftfahrzeug 2 bzw. Fahrzeugschlüssel 4 die zu empfangenden Signale messen und diese am jeweiligen anderen Ort nachbilden. Dabei ist es für einen Angreifer deutlich schwieriger, zusätzlich die räumliche Orientierung die Signale korrekt nachzubilden als nur deren Amplitude, weil er dazu mehrere Antennen in der Nähe von Kraftfahrzeug 2 und Fahrzeugschlüssel 4 korrekt positionieren müsste.

## Patentansprüche

1. Verfahren zum Schutz gegen einen Relayangriff auf ein System bestehend aus mindestens einer ersten (2) und einer zweiten (4) Kommunikationsvorrichtung, wobei zwischen der ersten (2) und der zweiten (4) Kommunikationsvorrichtung Daten drahtlos übertragen werden, wobei
die erste Kommunikationsvorrichtung (2) innerhalb eines Frequenzbands ein erstes Spektrum von allen am Ort der ersten Kommunikationsvorrichtung (2) zu empfangenden, drahtlos übertragenen Signalen bestimmt, und
die zweite Kommunikationsvorrichtung (4) innerhalb des Frequenzbands ein zweites Spektrum von allen am Ort der zweiten Kommunikationsvorrichtung (4) zu empfangenden, drahtlos übertragenen Signalen bestimmt,
wobei das Frequenzband durch eine minimale und eine maximale Frequenz begrenzt wird,
wobei die zweite Kommunikationsvorrichtung (4) das zweite Spektrum an die erste Kommunikationsvorrichtung (2) überträgt,
wobei mittels der ersten Kommunikationsvorrichtung (2) das erste Spektrum mit dem zweiten Spektrum verglichen wird,
um festzustellen, ob sich die zweite Kommunikationsvorrichtung (4) am Ort der ersten Kommunikationsvorrichtung (2) befindet,
wobei das erste und das zweite Spektrum zu jeweils unterschiedlichen Zeiten bestimmt werden,
wobei die erste Kommunikationsvorrichtung (2) signalisiert der zweiten Kommunikationsvorrichtung (4) wann die zweite Kommunikationsvorrichtung (4) mit der Bestimmung des zu empfangenden Spektrums beginnen bzw. enden soll.

2. Verfahren nach Anspruch 1, wobei das erste und das zweite Spektrum ständig oder nur zu bestimmten Zeiten bestimmt werden.

3. Verfahren nach einem der vorhergehenden Ansprüche, wobei die erste Kommunikationsvorrichtung (2) ein drahtlos übertragenes Signal aussendet, dessen Frequenz innerhalb des Frequenzbands liegt, welches sowohl von der ersten (2) als auch von der zweiten (4) Kommunikationsvorrichtung empfangen wird.

4. Verfahren nach einem der vorhergehenden Ansprüche, wobei die erste Kommunikationsvorrichtung (2) der zweiten Kommunikationsvorrichtung (4) mitteilt, für welche Frequenz eine Signalamplitude zu bestimmen ist.

5. Verfahren nach einem der vorhergehenden Ansprüche, wobei die Datenübertragung zwischen der ersten (2) und der zweiten (4) Kommunikationsvorrichtung verschlüsselt ist.

6. Verfahren nach einem der vorhergehenden Ansprüche, wobei die erste (2) und die zweite (4) Kommunikationsvorrichtung jeweils über drei Antennen verfügen, wobei die drei Antennen jeweils in einem Winkel zueinander angeordnet sind.

7. Verfahren nach einem der vorhergehenden Ansprüche, wobei ein räumlicher Winkel zwischen den einzelnen zu empfangenden Signalen bestimmt wird.

8. Verfahren nach einem der vorhergehenden Ansrüche, wobei die erste Kommunikationsvorrichtung (2) ein Kraftfahrzeug und die zweite Kommunikationsvorrichtung (4) ein Fahrzeugschlüssel ist.

## Claims

1. A method for protection against a relay attack on a system composed of at least a first (2) and a second (4) communication device, wherein data are transmitted wirelessly between the first (2) and the second (4) communication device, wherein
the first communication device (2) ascertains a first spectrum of all wirelessly transmitted signals to be received at the location of the first communication device (2) within a frequency band, and
the second communication device (4) ascertains a second spectrum of all wirelessly transmitted signals to be received at the location of the second communication device (4) within the frequency band,
wherein the frequency band is limited by a minimum and a maximum frequency,
wherein the second communication device (4) transmits the second spectrum to the first communication device (2),
wherein by means of the first communication device (2) the first spectrum is compared with the second spectrum
in order to determine whether the second communication device (4) is located at the location of the first communication device (2),
wherein the first and the second spectrum are ascertained at respectively different times,
wherein the first communication device (2) signals to the second communication device (4) when the second communication device (4) should start or finish the ascertainment of the spectrum to be received.

2. The method according to claim 1, wherein the first and the second spectrum are ascertained constantly or only at certain times.

3. The method according to any of the preceding claims, wherein the first communication device (2) emits a wirelessly transmitted signals whose frequency is within the frequency band which is received both by the first (2) and by the second (4) communication device.

4. The method according to any of the preceding claims, wherein the first communication device (2) notifies the second communication device (4) for which frequency a signal amplitude is to be ascertained.

5. The method according to any of the preceding claims, wherein the data transmission between the first (2) and the second (4) communication device is encrypted.

6. The method according to any of the preceding claims, wherein the first (2) and the second (4) communication device each have three antennas, wherein the three antennas are respectively arranged at an angle to each other.

7. The method according to any of the preceding claims, wherein a spatial angle between the individual signals to be received is ascertained.

8. The method according to any of the preceding claims, wherein the first communication device (2) is a motor vehicle and the second communication device (4) is a vehicle key.

## Revendications

1. Procédé de protection contre une attaque de relais sur un système consistant en au moins un premier (2) et un deuxième (4) dispositif de communication, cependant que, entre le premier (2) et un deuxième (4) dispositif de communication, des données sont transmises sans fil,
cependant que le premier dispositif de communication (2) détermine à l'intérieur d'une bande de fréquence un premier spectre de tous les signaux transmis sans fil devant être reçus à l'emplacement du premier dispositif de communication (2), et
le deuxième dispositif de communication (4) détermine à l'intérieur de la bande de fréquence un deuxième spectre de tous les signaux transmis sans fil devant être reçus à l'emplacement du deuxième dispositif de communication (4),
cependant que la bande de fréquence est limitée par une fréquence minimale et une maximale,
cependant que le deuxième dispositif de communication (4) transmet le deuxième spectre au premier dispositif de communication (2),
cependant que, au moyen du premier dispositif de communication (2), le premier spectre est comparé avec le deuxième spectre ,
afin de déceler si le deuxième dispositif de communication (4) se trouve à l'emplacement du premier dispositif de communication (2),
cependant que le premier et le deuxième spectre sont déterminés à des moments respectivement différents,
cependant que le premier dispositif de communication (2) signale au deuxième dispositif de communication (4) quand le deuxième dispositif de communication (4) doit commencer ou terminer la détermination du spectre à recevoir.

2. Procédé selon la revendication 1, cependant que le premier et le deuxième spectre sont déterminés constamment ou seulement à des moments déterminés.

3. Procédé selon une des revendications précédentes, cependant que le premier dispositif de communication (2) émet un signal transmis sans fil dont la fréquence se situe à l'intérieur de la bande de fréquence qui est tant reçue par le premier (2) que par le deuxième dispositif de communication (4).

4. Procédé selon une des revendications précédentes, cependant que le premier dispositif de communication (2) fait savoir au deuxième dispositif de communication (4) pour quelle fréquence une amplitude de signal est à déterminer.

5. Procédé selon une des revendications précédentes, cependant que la transmission de données entre le premier (2) et le deuxième (4) dispositif de communication est cryptée.

6. Procédé selon une des revendications précédentes, cependant que le premier (2) et le deuxième (4) dispositif de communication disposent respectivement de trois antennes, cependant que les trois antennes sont respectivement agencées en un angle les unes par rapport aux autres.

7. Procédé selon une des revendications précédentes, cependant qu'un angle spatial entre les signaux individuels à recevoir est déterminé.

8. Procédé selon une des revendications précédentes, cependant que le premier dispositif de communication (2) est un véhicule automobile, et le deuxième dispositif de communication (4) est une clé de véhicule.
